(19) Europäisches Patentamt / European Patent Office / Office européen des brevets

(11) **EP 2 348 702 A2**

(12) **EUROPEAN PATENT APPLICATION**

(43) Date of publication:
**27.07.2011 Bulletin 2011/30**

(51) Int Cl.:
***H04N 1/60*** *(2006.01)*

(21) Application number: **11151409.7**

(22) Date of filing: **19.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.01.2010 JP 2010010344**

(71) Applicant: **Fujifilm Corporation**
**Minato-ku**
**Tokyo 106-8620 (JP)**

(72) Inventor: **Katayama, Takeshi**
**Tokyo 107-0052 (JP)**

(74) Representative: **Klunker . Schmitt-Nilson . Hirsch**
**Patentanwälte**
**Destouchesstrasse 68**
**80796 München (DE)**

(54) **Print information managing apparatus, print information managing method, print information managing system, and recording medium with program recorded therein**

(57) Color values in an overlapping area (120, 166, 168, 170, 174), in which at least two of a plurality of acquired gamuts (G1, G2, Ga, Gb, Gc) overlap each other, are associated with common information (ID numbers), which is common to prints (34, 34c, 34m, 34p) for producing the at least two gamuts. Print information of the prints (34, 34c, 34m, 34p) is encoded into target color values (130). Management patches (42, 42a, 42b, 42c, 42d) including the encoded target color values (130) are added to the prints (34, 34c, 34m, 34p).

FIG. 16D

**Description**

BACKGROUND OF THE INVENTION

Field of the Invention:

The present invention relates to a print information managing apparatus, a print information managing method, a print information managing system, and a recording medium with a program recorded therein for encoding print information of a print into prescribed color values, printing management patches having the color values together with the print, and decoding the color values of the management patches, which have been acquired by a colorimetric process, for thereby acquiring and managing the print information.

Description of the Related Art:

With significant advances in inkjet technology in recent years, it is becoming possible for inkjet printers to produce large color prints of high quality at high speeds. Inkjet printers are not only popular for private or home use, but also are widely used in commercial applications nowadays. Inkjet printers make it possible to print on POP (Point Of Purchase) posters, wall posters, large-size mediums such as outdoor advertisements and billboards, roll mediums, and thick hard mediums.

There are a wide variety of print mediums (hereinafter also referred to as "mediums") available for use in prints to meet various commercial demands. For example, such print mediums include paper mediums such as synthetic paper, thick paper, aluminum-evaporated paper, etc., resin mediums such as vinyl chloride, PET, etc., and tarpaulin paper made of woven fiber cloth with synthetic resin films applied to both surfaces thereof.

Since advertisement prints are expected to be effective to arouse consumer motivation to buy advertised products through visual sensation, the finish of the colors in such prints is of particular importance. Heretofore, there have been disclosed various color matching technologies, such as a method of generating an ICC (International Color Consortium) profile, a method of adjusting a designated color, etc., as print color managing means. According to such disclosed color matching technologies, it is the general practice to print a color chart including a plurality of color patches of different colors with a printing machine, and then to feedback the evaluation results of the color chart to the printing machine.

For example, a color chart printed by a printing machine and having color patches of 100 through 1000 colors is measured by a colorimeter, whereby an ICC profile of the printing machine can be generated based on the measured color values. Furthermore, the operator can visually recognize a color chart, the colors of which are gradually changed in the vicinity of a designated color, select the color of a color patch judged to be closest to the designated color, and then make fine adjustments to match the selected color.

For accurately reproducing colors on the printing machine and making fine color adjustments, it is desirable that print information of a color chart, which actually has been measured or evaluated, should be able to be tracked down. Such print information refers to various items of information concerning printing, and signifies a broad concept covering not only printing conditions including a print mode, a print medium type, etc., but also the intended application, a printing machine identification number, a designated color number, etc.

There has been proposed a process of embedding each item of print information based on the colors of color patches and layouts thereof as one of processes of checking preset print information against a printed color chart and for managing the print information without fail. The proposed process allows a colorimeter to be used in place of a readout means for reading an identification code such as a bar code or the like, and makes it possible to identify the print information correctly with a few color patches.

Japanese Laid-Open Patent Publication No. 2005-328255 discloses a color chart, wherein a certain color is selected from color proof color patches and the position of the color patch of the certain color is changed depending on preset printing conditions. The publication also discloses a system for and a method of identifying printing conditions for the color chart by measuring the color chart with a colorimeter and acquiring positional information (an address) of the color patch of the certain color on the color chart.

Japanese Laid-Open Patent Publication No. 2007-221571 and Japanese Laid-Open Patent Publication No. 2007-068083 disclose a color chart having management patches (corresponding to "attribute specifying color patches" in Japanese Laid-Open Patent Publication No. 2007-221571, and "patch sheets" in Japanese Laid-Open Patent Publication No. 2007-068083), in addition to color proof patches. The publications also disclose a system for and a method of identifying printing conditions for the color chart by measuring the color chart with a colorimeter, and acquiring positional information (addresses) of the color proof color patches on the color chart.

Under an ordinary printing system, it is the general practice to produce prints on a plurality of types of mediums with a plurality of printing machines. Even if prints are produced on a plurality of types of mediums with one printing machine, or if prints are produced on one type of medium with a plurality of printing machines, it is preferable to use a consolidated approach when managing print information using the management patches referred to above.

Methods disclosed in Japanese Laid-Open Patent Publication No. 2005-328255 and Japanese Laid-Open Patent Publication No. 2007-221571 serve to refer to the two-dimensional positional information on a color chart and convert the two-dimensional positional information into print information. Therefore, the disclosed methods are applicable only to special prints such as color charts, and not applicable to other prints.

The color chart disclosed in Japanese Laid-Open Patent Publication No. 2007-068083 includes a very large print area taken up by management patches. It is physically difficult to add a number of management patches to prints, other than to test patterns such as color charts or the like.

For appropriately managing print information using management patches without limitations imposed by the types and layouts of prints, it is effective to use a process for directly associating color values in the range of a gamut and print information with each other. A table that is capable of determining such an association between color values and print information is referred to as a "color association table".

When a color association table is generated for each gamut, it is necessary to associate color values in the range of the gamut and print information consistently with each other. More specifically, when color association tables for respective gamuts are generated independently of each other, the color values have to be set without overlaps. However, if a gamut to be managed is changed or newly added, then according to the practice of setting color values without overlaps, color association tables have to be confirmed for consistency with respect to each changed or newly added gamut. Instances may eventually occur, which lead to a shortage of color values that can be used in color association tables, and hence result in a failure to carry out efficient information management.

SUMMARY OF THE INVENTION

An object of the present invention is to provide a print information managing apparatus, a print information managing method, a print information managing system, and a recording medium with a program recorded therein, for efficiently managing print information of a print using management patches under a plurality of gamuts.

According to the present invention, there is provided a print information managing apparatus, comprising a gamut acquirer for acquiring a plurality of gamuts, a common information associator for associating color values, in an overlapping area in which at least two of the gamuts acquired by the gamut acquirer overlap each other, with common information that is common to prints for producing the at least two of the gamuts, an encoding processor for encoding print information of the prints into prescribed color values according to the color values and the common information, which are associated with each other by the common information associator, and a management patch adder for adding to the prints management patches having the prescribed color values encoded by the encoding processor.

Since the print information managing apparatus includes the common information associator for associating color values, in an overlapping area in which at least two of the gamuts acquired by the gamut acquirer overlap each other, with common information that is common to prints for producing the at least two of the gamuts, it is possible to share the same common information and color values in the overlapping area, and the number of colors required to produce the management patches can be reduced. Consequently, even in the presence of multiple gamuts, print information of the prints can efficiently be managed using the management patches.

Preferably, the common information associator associates the color values in the overlapping area with the common information using the plurality of gamuts, which are produced by at least two mediums printed by one printing machine.

Preferably, the common information associator associates the color values in the overlapping area with the common information using the plurality of gamuts, which are produced by printing processes carried out by at least two printing machines.

Preferably, the common information associator uses identifying information, which identifies the print information of the prints, as the common information. Thus, it is possible to manage the print information of the prints and the identifying information in relation to each other.

Preferably, the common information associator uses the print information of the prints as the common information. Thus, it is possible to manage the print information of the prints in direct association with the color values.

Preferably, the print information managing apparatus further comprises a print controller for controlling printing machines to print the prints to which the management patches have been added by the management patch adder, wherein the printed prints include at least color charts.

Preferably, the print information managing apparatus further comprises a decoding processor for decoding colorimetrically measured color values of the management patches according to the color values and the common information, which are associated with each other by the common information associator, thereby to acquire the print information.

Preferably, the print information managing apparatus further comprises a colorimetric unit for colorimetrically measuring the management patches in order to acquire the color values.

According to the present invention, there also is provided a print information managing method, comprising the steps of acquiring a plurality of gamuts, associating color values, in an overlapping area in which at least two of the acquired gamuts overlap each other, with common information that is common to prints for producing the at least two of the gamuts, encoding print information of the prints into prescribed color values according to the color values and the common information, which are associated with each other, and adding to the prints management patches having the encoded prescribed color values.

According to the present invention, there is further provided a print information managing system, comprising printing machines for printing prints, a print information managing apparatus for adding management patches representative of print information of the printing machines, and a colorimeter for colorimetrically measuring the management patches.

The print information managing apparatus comprises a gamut acquirer for acquiring a plurality of gamuts, a common information associator for associating color values, in an overlapping area in which at least two of the gamuts acquired by the gamut acquirer overlap each other, with common information that is common to the prints for producing the at least two of the gamuts, an encoding processor for encoding print information of the prints into prescribed color values according to the color values and the common information, which are associated with each other by the common information associator, and a management patch adder for adding to the prints management patches having the prescribed color values encoded by the encoding processor.

According to the present invention, there is also provided a recording medium storing therein a program for enabling a computer to control printing machines to print prints to which management patches representative of print information of the printing machines have been added.

The program enables the computer to function as a gamut acquirer for acquiring a plurality of gamuts, a common information associator for associating color values, in an overlapping area in which at least two of the gamuts acquired by the gamut acquirer overlap each other, with common information that is common to the prints for producing the at least two of the gamuts, an encoding processor for encoding print information of the prints into prescribed color values according to the color values and the common information, which are associated with each other by the common information associator, and a management patch adder for adding to the prints management patches having the prescribed color values encoded by the encoding processor.

With the print information managing apparatus, the print information managing method, the print information managing system, and the recording medium with the program recorded therein according to the present invention, since a plurality of gamuts are acquired, and color values, in an overlapping area in which at least two of the acquired gamuts overlap each other, are associated with common information that is common to the prints for producing the at least two of the gamuts, it is possible to share the same common information and the color values in the overlapping area, whereby the number of colors required to produce the management patches can be reduced. Consequently, even in the presence of multiple gamuts, print information of the prints can efficiently be managed using the management patches.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a perspective view of a print information managing system according to a first embodiment of the present invention;
FIG. 2 is a front elevational view of a profile color chart printed by a printing machine shown in FIG. 1;
FIG. 3 is a front elevational view of a designated color adjusting color chart printed by the printing machine shown in FIG. 1;
FIG. 4 is a front elevational view of a color sample printed by the printing machine shown in FIG. 1;
FIG. 5 is a front elevational view of a print printed by the printing machine shown in FIG. 1;
FIG. 6 is a functional block diagram of an image processing apparatus shown in FIG. 1;
FIG. 7 is a flowchart of a processing sequence for managing print information using the print information managing system shown in FIG. 1;
FIG. 8 is a flowchart of a processing sequence for producing a print with management patches added thereto;
FIG. 9 is a graph showing the positional relationship between gamuts, which are printed and formed on two different types of mediums by a single printing machine;
FIG. 10 is a diagram showing by way of example a process of determining addresses of a color association table;

FIG. 11 is a table showing by way of example a print information list;

FIG. 12 is a flowchart of a processing sequence for acquiring print information by colorimetrically measuring management patches;

FIG. 13 is a perspective view of a print information managing system according to a second embodiment of the present invention;

FIG. 14 is a functional block diagram of an image processing apparatus shown in FIG. 13;

FIG. 15 is a functional block diagram of a database server shown in FIG. 13; and

FIGS. 16A through 16D are diagrams illustrating a process for associating ID numbers with color values of a plurality of gamuts.

DESCRIPTION OF THE PREFERRED EMBODIMENTS

Print information managing methods according to preferred embodiments of the present invention, in relation to print information managing apparatus and print information managing systems for carrying out the print information managing methods, will be described in detail below with reference to the accompanying drawings.

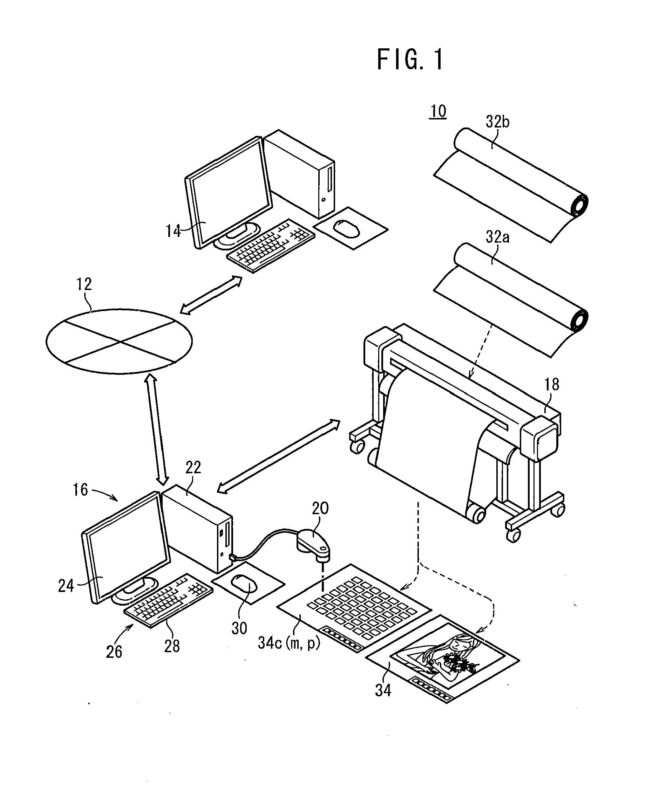

A print information managing system according to a first embodiment of the present invention will be described below with reference to FIGS. 1 through 12. FIG. 1 is a perspective view of a print information managing system 10 according to a first embodiment of the present invention.

As shown in FIG. 1, the print information managing system 10 basically comprises a LAN 12, an editing apparatus 14, an image processing apparatus (print information managing apparatus) 16, a printing machine 18, and a colorimeter (colorimetric unit) 20.

The LAN 12 is a network constructed according to communication standards such as Ethernet (registered trademark) or the like. The editing apparatus 14 and the image processing apparatus 16 are connected to each other by a wired or wireless link through the LAN 12.

The editing apparatus 14 is capable of editing an arrangement of color images made up of characters, figures, pictures, photos, etc., on each of pages to be printed. The editing apparatus 14 generates electronic manuscripts in a page description language (hereinafter referred to as "PDL"), e.g., 8-bit image data in color channels consisting of four colors (C, M, Y, K) or three colors (R, G, B).

PDL refers to a language that is descriptive of image information, including format information, positional information, color information (including density information), etc., of characters, figures, etc., in a "page" that serves as an output unit for printing, displaying, or the like. Known types of PDL include PDF (Portable Document Format according to 15032000-1:2008), PostScript (registered trademark) of AdobeSystems, and XPS (XML Paper Specification).

A color scanner, not shown, is connected to the editing apparatus 14. The color scanner is capable of optically reading a color original, which has been set in position. Therefore, the editing apparatus 14 can acquire, as image data of an electronic manuscript, color image data from the color scanner based on the color original that is read by the color scanner.

The image processing apparatus 16 converts color image data of an electronic manuscript described by PDL and acquired from the editing apparatus 14 into bitmap image data (a type of raster image data), performs a desired image processing process, e.g., a color conversion process, an image scaling process, an image arranging process, etc., on the bitmap image data, converts the processed bitmap image data into a print signal that matches the printing process of the printing machine 18, and sends the print signal to the printing machine 18.

The image processing apparatus 16 comprises a main unit 22 including a CPU, a memory, etc., a display device 24 for displaying color images, and an input device 26 serving as an input unit, including a keyboard 28 and a mouse 30. The colorimeter 20 is connected to the main unit 22 of the image processing apparatus 16.

The printing machine 18 comprises an inkjet printing apparatus for producing a color image based on a combination of standard inks made up of colors C, M, Y, K (process colors) and optional inks made up of light colors such as LC, LM, etc., and W (white).

The printing machine 18 controls propulsion of inks onto a print medium 32 (a rolled non-printed medium as shown in FIG. 1) based on print signals received from an external apparatus (e.g., the image processing apparatus 16) to print a color image on the print medium 32 (an unprinted rolled medium 32 as shown in FIG. 1), thereby producing a print 34, which may include a profile color chart 34p, a designated color adjusting color chart 34c, and a color sample 34m. FIG. 1 shows two types of mediums, which are denoted by the reference character 32 with respective alphabetical letters "a" and "b" appended thereto to identify the different mediums.

The print medium 32 may comprise a paper medium, such as synthetic paper, thick paper, aluminum-evaporated paper, or the like, a resin medium such as vinyl chloride, PET, or the like, or tarpaulin paper, etc.

The colorimeter 20 measures color values of an object to be measured. Such color values refer not only to tristimulus values X, Y, Z, the coordinates $L^*$, $a^*$, b of a uniform color space, etc., but also refer to a distribution of optical physical values (hereinafter referred to as "spectral data") with respect to wavelengths, e.g., a spectral radiance distribution, a spectral sensitivity distribution, spectral reflectivity, or spectral transmittance.

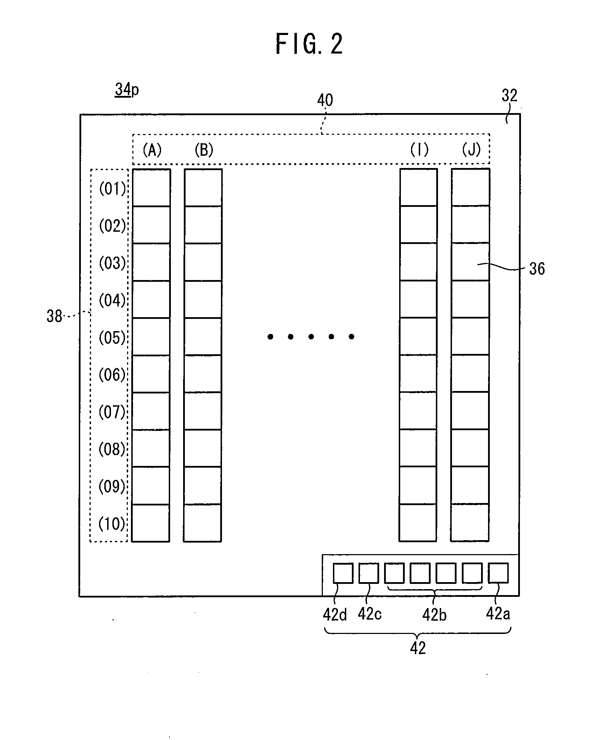

FIG. 2 is a front elevational view of a profile color chart 34p, which is printed by the printing machine 18 shown in FIG. 1.

The profile color chart 34p shown in FIG. 2 comprises 100 color patches 36 of different colors, which are substantially identical in shape and arranged in rows and columns, a sequence of numbers 38 and a sequence of alphabetical letters 40 for identifying positions of the color patches 36 along directions of the rows and the columns, and management patches 42 for identifying printing conditions for printing the profile color chart 34p, all of which are printed on the print medium 32.

The color patches 36 are arranged in a matrix having 10 vertical columns and 10 horizontal rows. The color patches 36 in each of the vertical columns are positioned closely together without spaces therebetween, whereas the color patches 36 in each of the horizontal rows are spaced by given intervals. Colors of the respective color patches 36 are set to given values, in a range of signal levels of C, M, Y, K values (a percentage range from 0% to 100% or an 8-bit gradation range from 0 to 255).

The sequence of numbers 38 represents a vertical string of characters ranging from (01) to (10), positioned in alignment with and to the left of the respective rows of color patches 36. The sequence of alphabetical letters 40 represents a horizontal string of characters ranging from (A) to (J), positioned in alignment with and at the top of the respective columns of color patches 36.

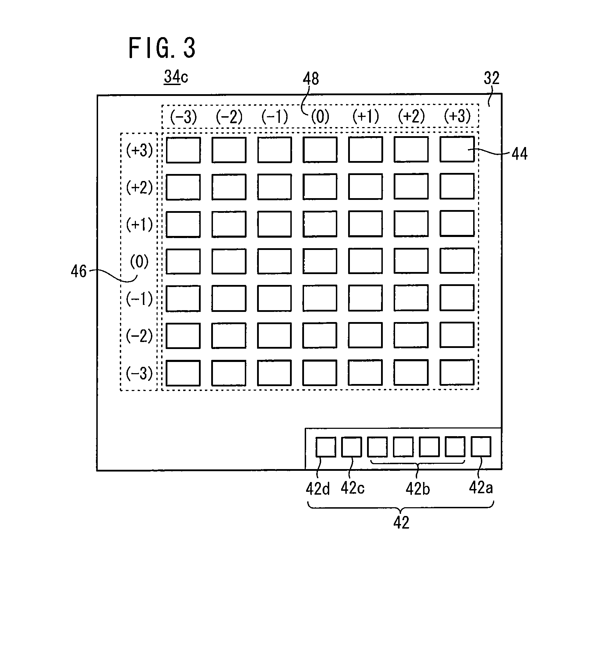

The management patches 42 include, successively from the left, one head patch 42a, four print information patches 42b, one checksum patch (colorimetry success/failure detecting patch) 42c, and one tail patch 42d. The management patches 42 shown in FIGS. 3 through 5 are identical to the management patches 42 shown in FIG. 2, and will not be described in detail below.

FIG. 3 is a front elevational view of a designated color adjusting color chart 34c, which is printed by the printing machine 18 shown in FIG. 1.

The designated color adjusting color chart 34c shown in FIG. 3 comprises 49 differently colored color patches 44, which are substantially identical in shape, row numbers 46 and column numbers 48 for identifying positions of the color patches 44 along directions of the rows and columns, and management patches 42 for identifying printing conditions for printing the designated color adjusting color chart 34c, all of which are printed on the print medium 32.

The color patches 44 are arranged in a matrix having 7 vertical columns and 7 horizontal rows, such that the color patches 44 are spaced from each other by given intervals. Colors of the respective color patches 44 are set to given values within a range of signal levels of C, M, Y, K values (a percentage range from 0% to 100% or an 8-bit gradation range from 0 to 255).

The row numbers 46 represent a vertical string of characters ranging from (+3) to (-3) positioned in alignment with and to the left of respective rows of the color patches 44. The column numbers 48, which also serve as identification information, represent a horizontal string of characters ranging from (-3) to (+3) positioned in alignment with and at the top of respective columns of the color patches 44.

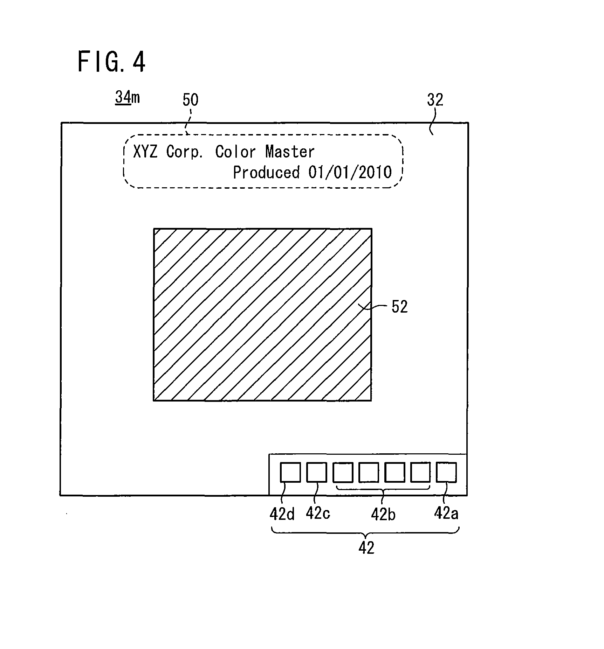

FIG. 4 is a front elevational view of a color sample 34m printed by the printing machine 18 shown in FIG. 1.

As shown in FIG. 4, the color sample 34m comprises a title 50, a color patch 52 of a given uniform color, and management patches 42 for acquiring print information of the color sample 34m, all of which are printed on a medium 32.

The title 50 represents agreements concerning the color sample 34m. For example, the title 50 represents various items of information, including a printer name as a party to a contract, a date on which the contract was drawn up, color information indicative of color values, and printing information, etc.

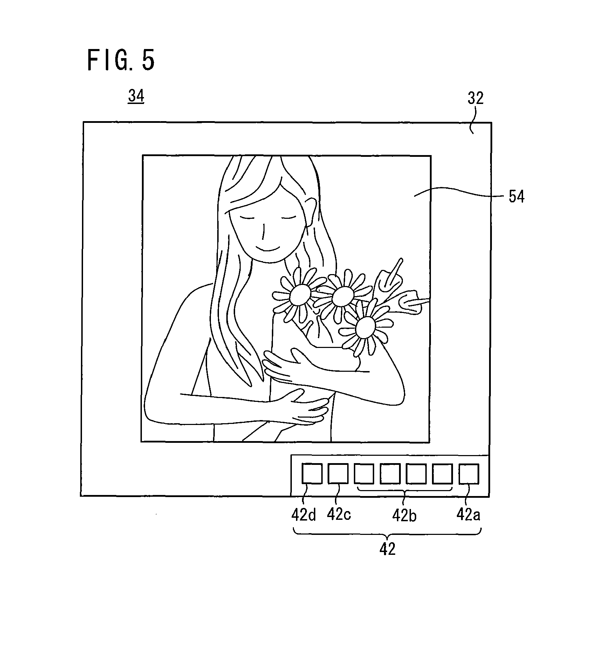

FIG. 5 is a front elevational view of a print 34, which is printed by the printing machine 18 shown in FIG. 1.

As shown in FIG. 5, the print 34 comprises a print area 54 printed on a medium 32, together with management patches 42 printed on the medium 32 for acquiring print information concerning the print 34. The management patches 42 are positioned in a marginal space of the medium 32, which is positioned to the right and downward of the print area 54, which is printed on and occupies a substantial area of the medium 32.

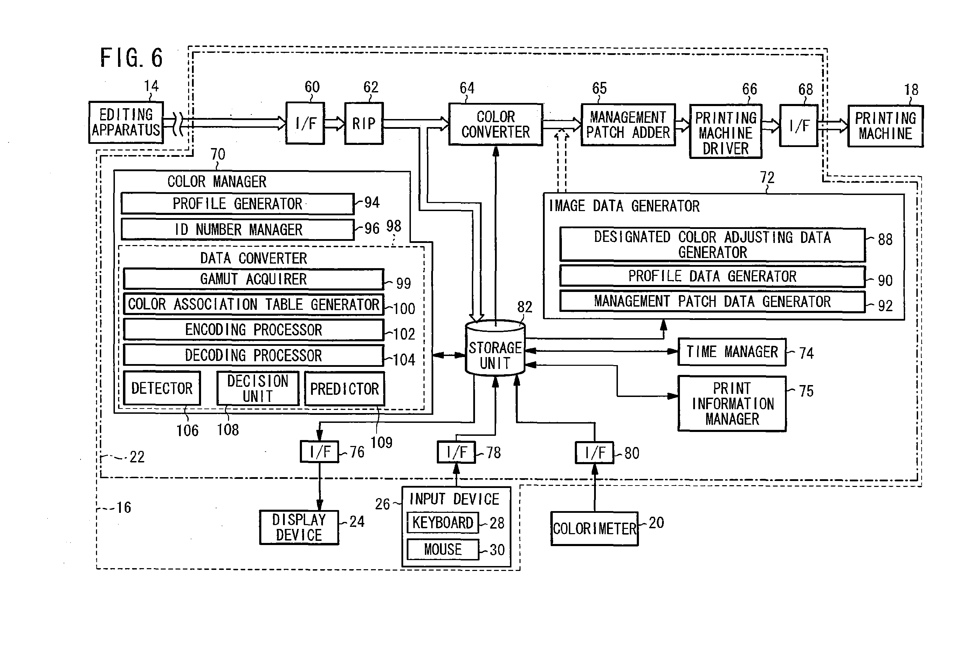

FIG. 6 is a functional block diagram of the image processing apparatus 16 shown in FIG. 1. In FIG. 6, an electronic manuscript is supplied along directions indicated by outlined solid-line arrows, color-chart image data is supplied along directions indicated by outlined broken-line arrows, and various other data are supplied along directions indicated by solid-line arrows.

As shown in FIG. 6, the main unit 22 of the image processing apparatus 16 includes an I/F 60 for entering an electronic manuscript supplied from the editing apparatus 14, an RIP (Raster Imaging Processor) 62 for converting the PDL format of the electronic manuscript supplied from the I/F 60 into a raster format, a color converter 64 for performing a color conversion process on the converted C, M, Y, K values (or R, G, B values) of the electronic manuscript from the RIP 62 in order to produce image data of new C, M, Y, K values, a management patch adder 65 for adding image data of the management patches 42 to image data of the new C, M, Y, K values produced by the color converter 64, a printing machine driver (print controller) 66 for converting image data of the new C, M, Y, K values produced by the management patch adder 65 into print control signals (ink propulsion control data) that matches the printing machine 18, and an I/F 68 for outputting the print control signals generated by the printing machine driver 66 to the printing machine 18.

The main unit 22 also includes a color manager 70 for managing profiles for different printing machines 18, an image data generator 72 for generating image data to print the designated color adjusting color chart 34c (see FIG. 3) or the management patches 42 (see FIGS. 2 through 5), a time manager 74 for managing various times, such as a printing request time, a colorimetry completion time, etc., a print information manager 75 for managing print information of the print 34 as a print information list according to a given format, an I/F 76 for connection to the display device 24, an I/F 78 for connection to the input device 26, including the keyboard 28 and the mouse 30, and an I/F 80 for connection to the colorimeter 20.

The main unit 22 also includes a storage unit 82 for storing various data supplied from various components of the main unit 22, and for supplying stored data to various components of the main unit 22. The storage unit 82 is connected to the I/F 60, the RIP 62, the color converter 64, the color manager 70, the image data generator 72, the time manager 74, the print information manager 75, the I/F 76, the I/F 78, and the I/F 80.

The color converter 64 comprises a target profile processor, not shown, for converting device-dependent data into device-independent data, and a print profile processor, not shown, for converting device-independent data into device-dependent data. Device-dependent data refer to data defined in terms of C, M, Y, K values, R, G, B values, or the like, for appropriately driving various devices. Device-independent data refer to data defined in terms of a display system, such as an HSL system, an HSB system, a CIELAB coordinate system, a CIELUV coordinate system, an XYZ system, or the like.

The image data generator 72 comprises a designated color adjusting data generator 88 for generating image data to print the designated color adjusting color chart 34c, a profile data generator 90 for generating image data to print the profile color chart 34p, and a management patch data generator 92 for generating image data to print the management patches 42.

The color manager 70 comprises a profile generator 94 for generating profiles for each of respective printing machines 18, an ID number manager 96 for managing ID numbers (identifying information) for the management patches 42, and a data converter 98 for converting print information and color values into each other according to prescribed rules. The data converter 98 comprises a gamut acquirer 99 for acquiring gamut information, a color association table generator (common information associator) 100 for generating a color association table, which associates ID numbers with color values, e.g., $L^*$, $a^*$, $v^*$ values (e.g., $L^*$, $a^*$, $b^*$), an encoding processor 102 for encoding print information into color values, a decoding processor 104 for decoding color values into print information, a detector 106 for detecting the head patch 42a or the tail patch 42d of the management patches 42, a decision unit 108 for determining whether or not the colorimeter 20 has successfully acquired color values, and a predictor 109 for predicting color values of the management patches 42 in a steady state of dry-down.

The RIP 62 can perform various image processing processes, including an image scaling process depending on the resolution, etc., of the printing machine 18, and a rotating and inverting process, which depends on a printing format at the time that the electronic manuscript is converted into raster image data.

The printing machine driver 66 generates ink propulsion control data corresponding to ink colors (C, M, Y, K, LC, LM, or W) from the C, M, Y, K values. Ink propulsion control data are data for controlling the printing machine 18 so as to eject inks (ink ejection ON/OFF, ink dot diameters, etc.) appropriately. When the printing machine driver 66 generates ink propulsion control data, the printing machine driver 66 requires that an 8-bit multiple-gradation image be converted into a low-gradation image, such as a binary image. The printing machine driver 66 can use a known algorithm, such as a dither matrix method, an error diffusion method, or the like, for example.

The color converter 64 can correct the profile depending on the print mode of the printing machine 18. The print mode refers to various print settings, such as the number of nozzles in the print head, the timing (unidirectional/bidirectional) of ink ejection during scanning of the print head, the number of passes, the number and/or types of inks used by the printing machine 18, an algorithm for generating ink propulsion control data, etc.

The main unit 22 includes a controller (not shown) comprising a CPU, etc., for controlling all of the image processing processes described above. More specifically, the controller controls not only operation of various components of the main unit 22, e.g., reading data from and writing data to the storage unit 82, but also controls transmission of display signals via the I/F 76 to the display device 24, as well as acquisition of colorimetric data from the colorimeter 20 via the I/F 80.

The image processing apparatus 16 according to the present embodiment is constructed as described above. The image processing functions described above can be performed according to application programs, which are stored in the storage unit (recording medium) 82, and which operate under the control of a base program (i.e., an operating system).

Such programs may be recorded in a computer-readable recording medium, and may be read into a computer system and executed thereby. The term "computer system" includes an OS and hardware including peripheral devices. The computer-readable recording medium comprises a portable medium such as a flexible disk, a magnetooptical disk, a CD-ROM, or the like, or a storage unit such as a hard disk or the like incorporated in the computer system. The computer-readable recording medium may also include a medium for dynamically holding programs for a short period of time, such as a communication line for transmitting programs via a network such as the Internet or the like, or a communication channel such as a telephone line, or a memory for holding programs for a certain period of time such as a volatile memory in a computer system, which functions as a server or a client in a network environment.

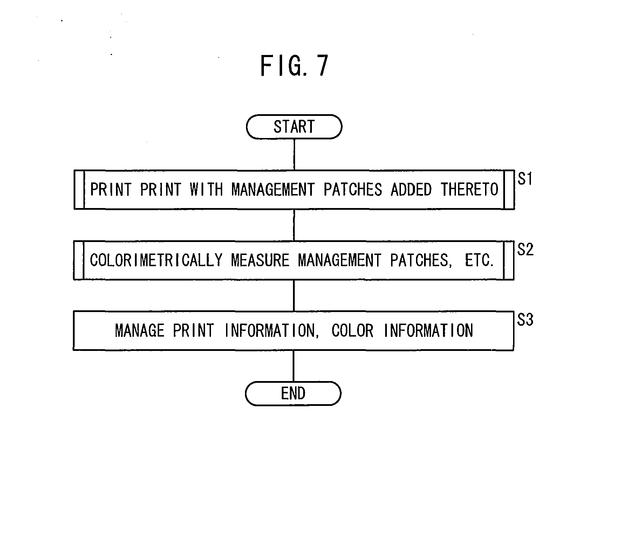

The print information managing system 10 according to the first embodiment basically is constructed as described above. Operations of the print information managing system 10 will be described below, primarily with reference to FIGS. 7 through 12.

FIG. 7 is a flowchart of a processing sequence for managing print information with the print information managing system 10 shown in FIG. 1.

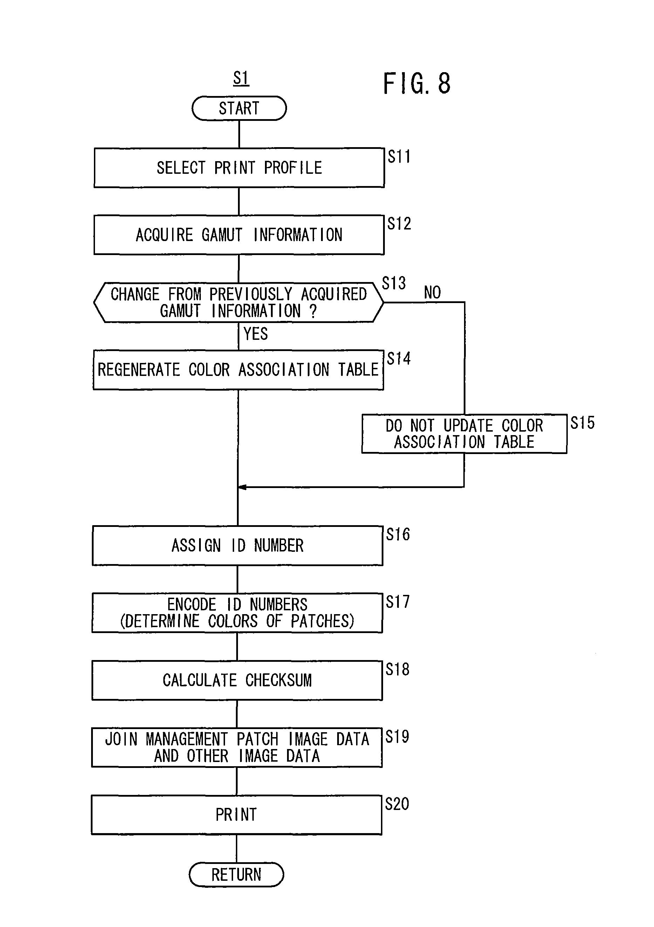

The operator of the print information managing system 10 prints a print 34 with management patches 42 added thereto in step S1. A processing sequence for producing a print 34 with management patches 42 added thereto will be described below with reference to FIG. 8.

A print profile, which is suitable for the printing machine 18, is selected in step S11. More specifically, print profiles, which are suitable for combinations of the printing machine 18 and different types of mediums 32, are stored in advance in the storage unit 82. One of the print profiles stored in the storage unit 82, which is suitable for the present combination of the printing machine 18 and the medium 32a, for example, is selected.

Then, gamut information of the printing machine 18 is acquired in step S12. As shown in FIG. 6, a print profile, which is suitable for the combination of the printing machine 18 and the medium 32a, and a print profile, which is suitable for the combination of the printing machine 18 and the medium 32b, are acquired from the storage unit 82 and supplied to the gamut acquirer 99. The gamut acquirer 99 extracts respective color conversion LUTs from the print profiles, and acquires gamut information, e.g., $L^*$, $a^*$, $b^*$, based on the color conversion LUTs.

If the gamut information acquired previously has been updated in step S13, then the gamut acquirer 99 regenerates the color association table in step S14. If the gamut information acquired previously has not been updated in step S13, then the gamut acquirer 99 does not update the existing color association table, but uses the existing color association table in step S15.

The gamut acquirer 99 supplies the acquired gamut information to the color association table generator 100. The color association table generator 100 generates a color association table, and stores the generated color association table in the storage unit 82. The color association table associates ID numbers with color values within a given color space, e.g., $L^*$, $a^*$, $b^*$.

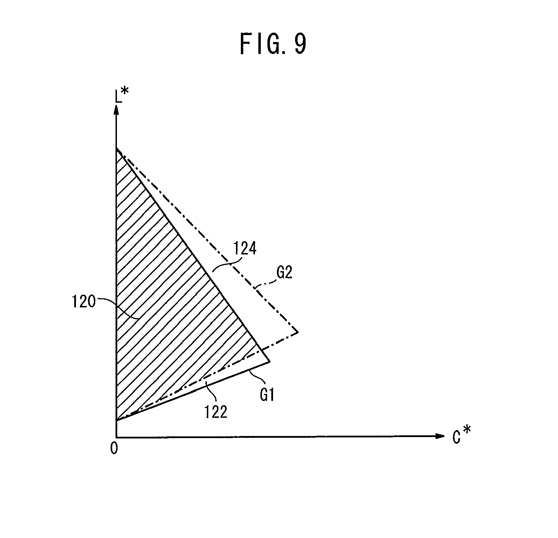

FIG. 9 is a graph showing a positional relationship between gamuts G1, G2, which are printed and formed on two different types of mediums 32a, 32b by the same printing machine 18. The graph shown in FIG. 9 represents an $H^*$-axis cross-sectional view of an $L^*C^*H^*$ space, and has a horizontal axis representing a $C^*$-axis, and a vertical axis representing an $L^*$-axis. The area surrounded by solid lines represents the gamut G1 on the medium 32a, and the area surrounded by dot-and-dash lines represents the gamut G2 on the medium 32b.

The gamut G1 and the gamut G2 have an overlapping area 120. Since both of the mediums 32a, 32b can reproduce colors in the overlapping area 120, common ID numbers (global ID numbers serving as common information) are used for the overlapping area 120. A differential, which is set between the gamut G1 and the overlapping area 120, is referred to as a non-overlapping area 122. Since only the medium 32a can reproduce colors in the non-overlapping area 122, ID numbers (private ID numbers) unique to the medium 32a are used for the non-overlapping area 122. A differential, which is set between the gamut G2 and the overlapping area 120, is referred to as a non-overlapping area 124. Since only the medium 32b can reproduce colors in the non-overlapping area 124, ID numbers (private ID numbers) unique to the medium 32b are used for the non-overlapping area 124.

It is assumed that 50 ID numbers (1 through 50) are assigned to each medium 32. If independent color association tables are generated respectively for the mediums 32, as is the case with the related art, then it is necessary for the colors within the overlapping area 120 not to overlap with color values in the color association tables, because any color value overlaps will result in an erroneous detection of ID numbers.

According to the first embodiment, global ID numbers (1 through 20) are assigned to colors in the overlapping area 120, and private ID numbers (20 through 50) are assigned to colors in the non-overlapping areas 122, 124. Consequently, the same colors in the overlapping area 120 are associated with global numbers that are common to the different mediums 32a, 32b. In this manner, the ID numbers and the color values are consistently associated with each other for efficiently managing print information of the print 34.

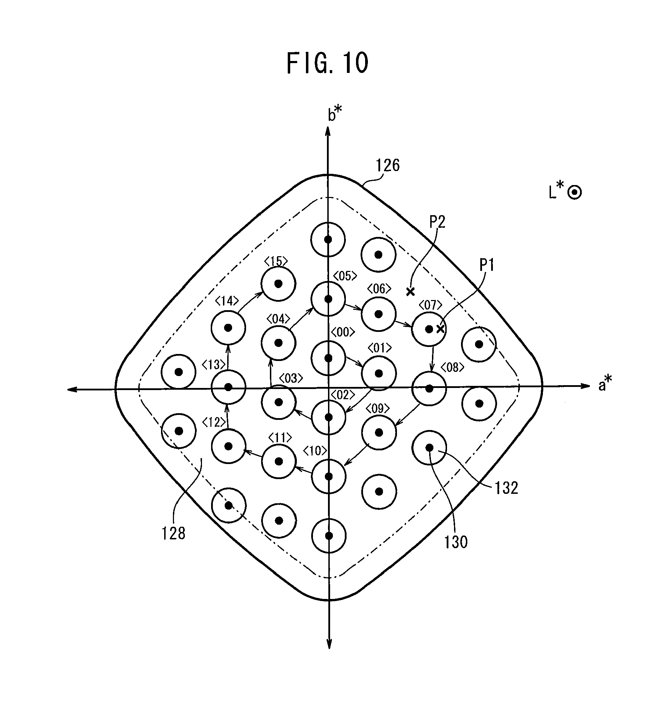

FIG. 10 is a diagram showing by way of example a process of determining addresses of a color association table. FIG. 10 shows an $a^*b^*$ plane on an $L^*a^*b^*$ space.

A defined gamut 126 of the printing machine 18 includes an encoding area 128 in an inside area thereof, except for proximity colors on the boundary of the gamut 126. As described later, the readout success rate for the management patches 42 is made higher by using colors within the encoding area 128, which tends to have higher color reproducibility, rather than by using colors on the boundary of the gamut 126, which tend to have unstable color reproducibility.

According to prescribed rules, the color association table generator 100 sets target color values 130 (prescribed color values) from among countless colors in the encoding area 128. For setting such target color values 130, a variety of setting methods are available, and various types of algorithms can be used. For example, in order for the color association table generator 100 to be capable of generating color association tables from various gamut configurations according to the same rules, the target color values 130 may be arranged in a grid-like pattern, such that color differences between adjacent target color values 10 are set substantially equal to each other.

Thereafter, the color association table generator 100 generates a suitable color association table, in which different numbers are associated with respective target color values 130. In FIG. 10, the associated numbers are arranged along a spiral pattern, which starts at an origin ($L^*$ axis). Values of the associated numbers and the order of assignment of the associated numbers are not limited to those shown in FIG. 10.

In conjunction with generation of the color association table, an allowable error range of color differences between the target color values 130 is established. Errors in the color differences refer to deviations of color reproduction due to performance variations of the colorimeter 20 or the printing machine 18, as well as dry-down. As shown in FIG. 10, closed spaces (color areas) 132 around respective target color values 130 are established as such an allowable range.

Print information of the print 34 is generated as a print information list according to a prescribed format. The print information is managed by the print information manager 75.

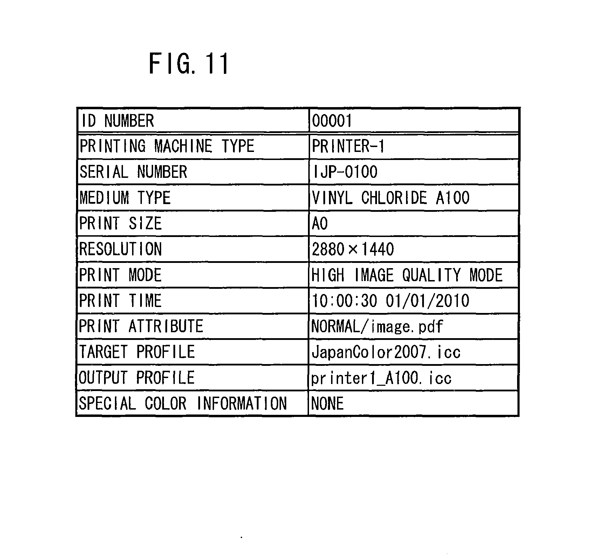

FIG. 11 is a table showing by way of example a print information list for an ID number. In FIG. 11, the print information list includes the type of printing machine 18, the serial number thereof, the type of medium 32, along with a print size, resolution, print mode, print time, print attribute, target profile, print profile, and special color information, which are managed together. The print time actually refers to a time immediately before color values of management patches 42 have been determined. The print attribute refers to contents plotted on the prints 34, as shown in FIGS. 2 through 5. If an ordinary print 34 is involved, then the file name of the electronic manuscript may also be managed. The special color information refers to a designated special color, and a color selected on the basis of the designated color adjusting color chart 34c.

Referring back to FIG. 8, an ID number is assigned in step S16. When print information of a new print 34 is acquired, the ID number manager 96 selects an unused ID number, which can be used for mediums 32, and the print information manager 75 generates a print information list corresponding to the selected ID number. The generated print information list is stored in the storage unit 82, for example.

Then, ID numbers are encoded in step S17. The print information of the printing machine 18 is encoded by the encoding processor 102 (see FIG. 6) based on the color association table, and then is converted into $L^*$, $a^*$, $b^*$ values.

A specific example of an encoding process will be described below. It is assumed that a given ID number x is a 6-figure numerical value in decimal notation, and is encoded by two colors ($L^*_1$, $a^*_1$, $b^*_1$), ($L^*_2$, $a^*_2$, $b^*_2$). In the encoding example, target color values 130 can be calculated according to the following equations (1) through (6) :

$$L^*_1 = k \times Int\{x/(10^5)\} + h \qquad \cdots(1)$$

$$a^*_1 = k \times Int\{x/(10^4)\} + h \qquad \cdots(2)$$

$$b^*_1 = k \times Int\{x/(10^3)\} + h \qquad \cdots(3)$$

$$L^*_2 = k \times Int\{x/(10^2)\} + h \qquad \cdots(4)$$

$$a^*_2 = k \times Int\{x/(10^1)\} + h \qquad \cdots(5)$$

$$b^*_2 = k \times Int\{x/(10^0)\} + h \qquad \cdots(6)$$

Within a range of the assigned ID numbers, k and h can be determined in advance, such that either one of the calculated two colors $(L^*_1, a^*_1, b^*_1)$, $(L^*_2, a^*_2, b^*_2)$ will fall within the range of the gamut. Assuming that the ID numbers can be encoded and decoded, then the notation of the ID number x is not limited to decimal notation, but may be selected as desired.

Next, a checksum of the management patches 42 is calculated in step S18. For example, the value of the checksum may be set to a remainder value. More specifically, the value of the checksum may be set to $\{N - \text{mod}(\Sigma V_i, N)\}\text{mod}(N)$ where mod is a modulus operator, and $\{V_i\}$ (I = 1, ..., M) represents the value of each print information patch 42b. In this manner, the color of the checksum patch 42c is determined.

The encoding processor 102 also determines colors of the head patch 42a and the tail patch 42d of the management patches 42. For example, colors, which are not used as colors for the color patches 36, 44 or the other management patches 42, may be selected as colors for the head patch 42a and the tail patch 42d in order to make such colors easily detectable.

Then, in step S19, image data for forming the management patches 42 are generated and added to a portion of the region of the other image data. More specifically, in steps S17, S18, the color value data obtained by the encoding processor 102 are supplied to the management patch data generator 92. The management patch data generator 92 generates patch image data based on the color value data, and supplies the generated patch image data to the management patch adder 65. At an appropriate time while the image data of the print 34 are being processed, the management patch adder 65 adds the patch image data to the image data representative of the print 34.

The management patches 42 may be placed in a location that can easily be distinguished from the color patches 36 (see FIGS. 2 and 3), or a location that can easily be measured colorimetrically by the operator.

Finally, a print 34 is printed in step S20.

An image processing sequence of the image processing apparatus 16 for printing a print 34 or a color sample 34m will be described in detail below with reference to FIG. 6.

When an electronic manuscript in PDL format supplied from the editing apparatus 14 is input to the image processing apparatus 16 via the LAN 12 and the I/F 60, the electronic manuscript is converted into 8-bit C, M, Y, K raster data (device-dependent image data) by the RIP 62. The 8-bit C, M, Y, K raster data then are converted into $L^*, a^*, b^*$ data (device-independent image data) by a target profile processor, not shown. The $L^*, a^*, b^*$ data are then converted into C, M, Y, K value data (device-dependent image data) by a print profile processor, not shown. The management patch adder 65 adds image data of the management patches 42 to the C, M, Y, K value data, which then are converted into print control signals (ink propulsion control data) by the printing machine driver 66. The print control signals are supplied from the printing machine driver 66 to the printing machine 18 via the I/F 68. If necessary, the C, M, Y, K raster data produced by the RIP 62 may temporarily be stored in the storage unit 82. Thereafter, the printing machine 18 produces a desired print 34 based on the print control signals.

Since target profiles and print profiles corresponding to a plurality of set conditions have been stored in the storage unit 82, a target profile and a print profile are selectively supplied to the color converter 64, depending on various preset conditions. If the profiles are corrected appropriately in view of the print mode of the printing machine 18, then more appropriate color conversion processes can be performed.

In this manner, a print 34 with management patches 42 added thereto is printed in step S20.

An image processing sequence of the image processing apparatus 16, at the time the designated color adjusting color chart 34c is printed, will be described in detail below with reference to FIG. 6.

Image data generated by the designated color adjusting data generator 88, based on given C, M, Y, K value data stored in the storage unit 82, are supplied via a path represented by the outlined broken-line arrow to the printing machine driver 66, from which the image data are supplied to the printing machine 18 in the same manner as when an electronic manuscript is printed. The printing machine 18 prints the designated color adjusting color chart 34c in step S20.

Further, an image processing sequence of the image processing apparatus 16, at the time the profile color chart 34p is printed, will be described in detail below with reference to FIG. 6.

Image data generated by the profile data generator 90, based on given C, M, Y, K value data stored in the storage unit 82, are supplied via a path represented by the outlined broken-line arrow to the printing machine driver 66, from which the image data are supplied to the printing machine 18 in the same manner as when an electronic manuscript is printed. The printing machine 18 prints the profile color chart 34p in step S20.

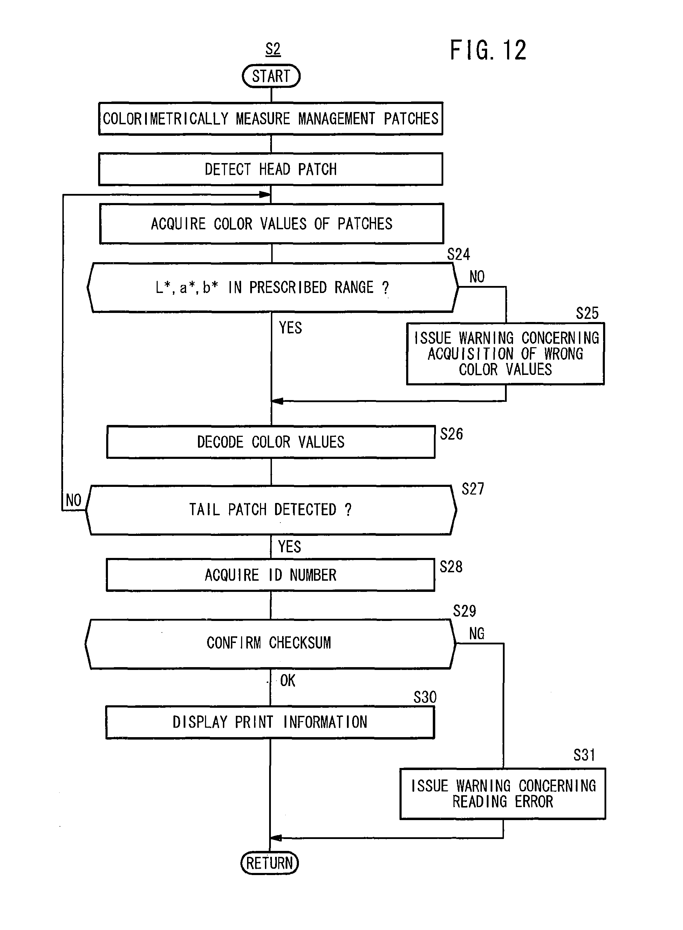

Then, referring back to FIG. 7, the management patches 42, etc., are colorimetrically measured in step S2, thereby automatically acquiring print information of the print 34. A processing sequence of the image processing apparatus 16 for acquiring print information of the print 34 will be described below in relation to the flowchart shown in FIG. 12.

First, the management patches 42 are colorimetrically measured in step S21. More specifically, the operator acquires a string of color value data by colorimetrically measuring the management patches 42 successively from the head patch 42a or the tail patch 42d, as a measurement start position, to the tail patch 42d or the head patch 42a, as a measurement end position.

Then, the head patch 42a is detected in step S22. More specifically, if color values, which are not used for any of the color patches 36 or the management patches 42, are selected as color values of the head patch 42a, then the head patch 42a can easily be detected.

Then, color values of patches are acquired in step S23. As shown in FIGS. 2 through 5, the operator measures color values of the four print information patches 42b, the checksum patch 42c, and the tail patch 42d, in that order. Then, in step S24, it is determined whether or not the color values $L^*$, $a^*$, $b^*$ fall within a prescribed range. If the color values $L^*$, $a^*$, $b^*$ fall within a prescribed range, then the color values are decoded in step S26.

If color values are represented by P1, as shown in FIG. 10, then since the color values fall within the closed space 132 of the target color value 130 to which the associated number "07" has been assigned, the color values are decoded into "07". Since the color values are decoded based on whether or not the color values fall within the closed spaces 132, the color values can be decoded while taking into account printing and colorimetric variations.

Since the color association table is prepared such that the closed spaces 132 do not overlap each other, the color values can be decoded uniquely, even in the presence of printing and colorimetric variations. The closed spaces 132 may be established such that the maximum color difference between two points within one closed space 132 resides within a range of from 5 to 15.

If the encoding area 128 is defined by color values $L^*$, $a^*$, $b^*$ where $20 \leq L^* \leq 80$, $-30 \leq a^* \leq 30$, $-30 \leq b^* \leq 30$, then the encoding area 128 has a volume of 60 x 60 x 60 = 216000. If one code is assigned to a cube having sides represented by 6, then the encoding area 128 can produce a maximum of 1000 codes.

If the color values $L^*$, $a^*$, $b^*$ do not fall within a prescribed range in step S24, then the color manager 70 produces a warning indicating acquisition of wrong color values in step S25. More specifically, a warning may be displayed on the display device 24 (see FIG. 1). The decoding processor 104 (see FIG. 6) selects a target color value 130, which is closest to the acquired color values, and decodes color values according to the selected target color value 130. More specifically, if color values are represented by P2 as shown in FIG. 10, then the color values do not fall within any of the closed spaces 132, however, the color values are decoded into "06", which is assigned to a target color value 130 that is closest to P2.

Referring back to FIG. 8, it is then determined whether or not the tail patch 42d has been detected in step S27. If the tail patch 42d has not been detected, the processes of steps S23 through S27 are repeated.

If the tail patch 42d is detected, then the values obtained by decoding the print information patches 42b are combined in order to acquire an ID number in step S28.

Then, the checksum is confirmed in step S29. More specifically, the decision unit 108 (see FIG. 6) divides the sum of the values of the four print information patches 42b and the checksum patch 42c by N in order to calculate a remainder value. If the remainder value is 0, then the decision unit 108 judges that all of the color values have been properly measured as OK. If the remainder value is not 0, then the decision unit 108 judges that at least one of the color values is improper as NG.

If the decision unit 108 judges OK, then the read print information is displayed in step S30. When the ID number, which was properly acquired by the decoding processor 104, is supplied to the print information manager 75, print information of the print 34 corresponding to the ID number is referred to. Print information of the print 34, which is referred to, is displayed on the display device 24 to enable the operator to confirm the print information with ease.

If the decision unit 108 judges NG, then a reading error is displayed in step S31. At this time, depending on the confirmed checksum (remainder value), the cause of the error, e.g., the colorimeter 20, the printing machine 18, or dry-down, may be determined and displayed on the display device 24.

The timer manager 74 may measure a period of time, which has elapsed from a time when the print 34 is printed to a time when the management patches 42 are colorimetrically measured. If the predictor 109 predicts color values $L^*$, $a^*$, $b^*$ in a steady state of the management patches 42 based on the elapsed period of time, then the management patches 42 can be read with increased accuracy.

As described above, in step S2, print information is acquired from the management patches 42, which have been added to the print 34.

Referring back to FIG. 7, finally, the print information is managed in step S3.

Assuming that the profile color chart 34p shown in FIG. 2 is printed, in this case, the operator colorimetrically measures the color patches 36 (see FIG. 2) of the profile color chart 34p with the colorimeter 20 connected to the image processing apparatus 16 in order to acquire color values $L^*$, $a^*$, $b^*$. Data concerning such color values are stored temporarily in the storage unit 82. Thereafter, a three-to-four dimensional conversion LUT is generated based on the corresponding relationship between the designated C, M, Y, K values and the acquired color values $L^*$, $a^*$, $b^*$, so that a print profile having a generated three-to-four dimensional conversion LUT can be generated.

Since the operator also has colorimetrically measured the management patches 42 together with the color patches 36, the print profile is associated correctly with print information (e.g., the type of medium 32) of the profile color chart 34p. Thereafter, the print profile is stored in the storage unit 82.

Assuming that the designated color adjusting color chart 34c shown in FIG. 3 is printed, in this case, the operator selects one of the color patches 44 of the designated color adjusting color chart 34c. More specifically, the operator compares a color chip or a color sample, which represents a designated color as a target that is a color displayed on the display device 24, with the designated color adjusting color chart 34c, and selects a color patch 44, the color of which is closest to the designated color. Thereafter, a three-to-four dimensional conversion LUT is generated or corrected based on deviations (i.e., differences between design values and measured values) of the color values $L^*$, $a^*$, $b^*$ of a color that is closest to the designated color, so that a print profile having the generated three-to-four dimensional conversion LUT can be generated.

Since the operator also has colorimetrically measured the management patches 42 together with the color patches 44, the print profile is associated correctly with the print information (e.g., the special color information input as the designated color) of the designated color adjusting color chart 34c. Thereafter, the print profile is stored in the storage unit 82.

Assuming that the color sample 34m shown in FIG. 4 is printed, in this case, the operator colorimetrically measures the color patch 52 and the management patches 42 of the color sample 34m. Thereafter, print information of the color sample 34m (e.g., the print time and the special color information) and color values of the color patch 52 are displayed on the display device 24. The operator can thus confirm conditions under which the color sample 34m has been generated, at any time.

The management patches 42 of the print 34 shown in FIG. 5 are not typically colorimetrically measured. However, if the print 34 shown in FIG. 5 suffers from a printing error such as an inappropriate print color or the like, then the management patches 42 may be colorimetrically measured in order to confirm the print information, for thereby assisting in discovering causes of the printing error.

By thus colorimetrically measuring the management patches 42, the print information of the print 34 is automatically acquired and appropriately managed.

In the first embodiment, print information of a print 34 is managed as a print information list, which corresponds to a generated ID number. However, the present invention is not limited to such a process. Variables of the print information may be related in advance to associated numbers of the color association table. For example, the state of a given print mode, which is ON, may be related to "1" and the state of a print mode, which is OFF, may be related to "0", and a combination of such associated numbers of the variables may be encoded. Alternatively, variables of the print information may be converted into codes, and values of such codes may be related to associated numbers of the color association table. For example, a registered name "PRINTER-1" of the printing machine 18 may be converted into an ASCII code, and the value of the ASCII code may be related to associated numbers of the color association table.

As described above, since the data converter 98 includes the gamut acquirer 99 for acquiring a plurality of gamuts G1, G2, together with the color association table generator 100 for associating color values, in the overlapping area 120 where (at least) two of the plural gamuts G1, G2 overlap each other, with global ID numbers (common information) which are common to the prints 34 with the two gamuts, the same global numbers and color values can be shared in the overlapping area 120, and the number of colors required to produce the management patches 42 can be reduced. Consequently, even in the presence of plural gamuts G1, G2, print information of the print 34 can efficiently be managed using the management patches 42.

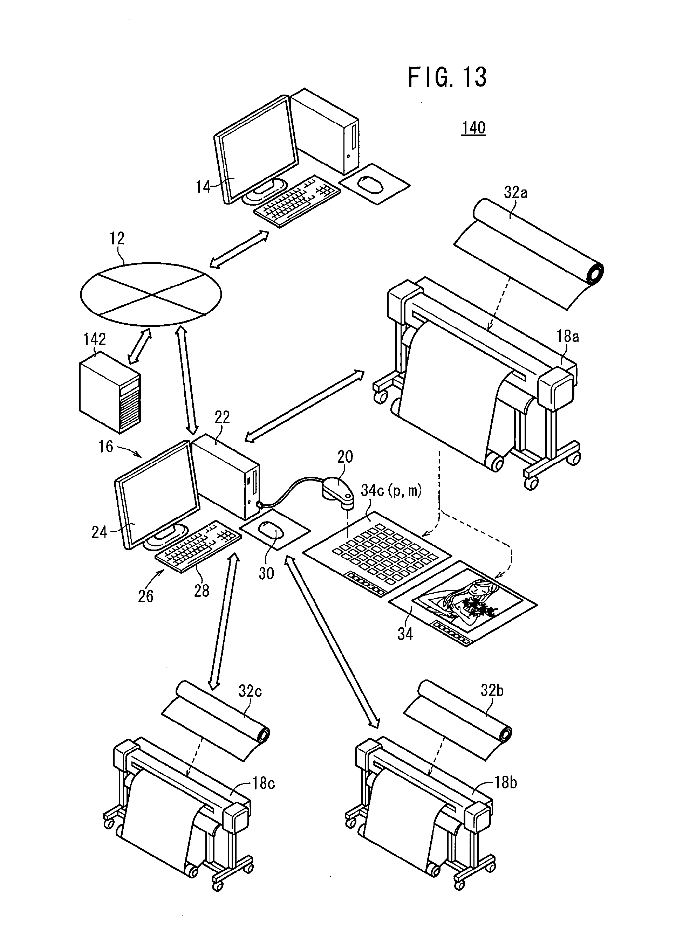

A print information managing system 140 according to a second embodiment of the present invention will be described below with reference to FIGS. 13 through 16. Components of the print information managing system 140, which are identical to those of the print information management system 10 according to the first embodiment, are denoted by identical reference characters, and such features will not be described in detail below.

FIG. 13 is a perspective view of the print information managing system 140 according to the second embodiment of the present invention. As shown in FIG. 13, the print information managing system 140 basically comprises a LAN 12, an editing apparatus 14, an image processing apparatus 16, three printing machines 18a, 18b, 18c, three mediums 32a, 32b, 32c, a colorimeter 20, and a database server (print information managing apparatus) 142. The print information managing system 140 according to the second embodiment differs from the print information management system 10 according to the first embodiment, in that the print information managing system 140 additionally includes the three printing machines 18a, 18b, 18c and the database server 142. If individual printing machines and mediums do not need to be specified in the following description, then the alphabetical suffixes "a", "b", "c" which are added to the reference numerals "18", "32" may be dispensed with.

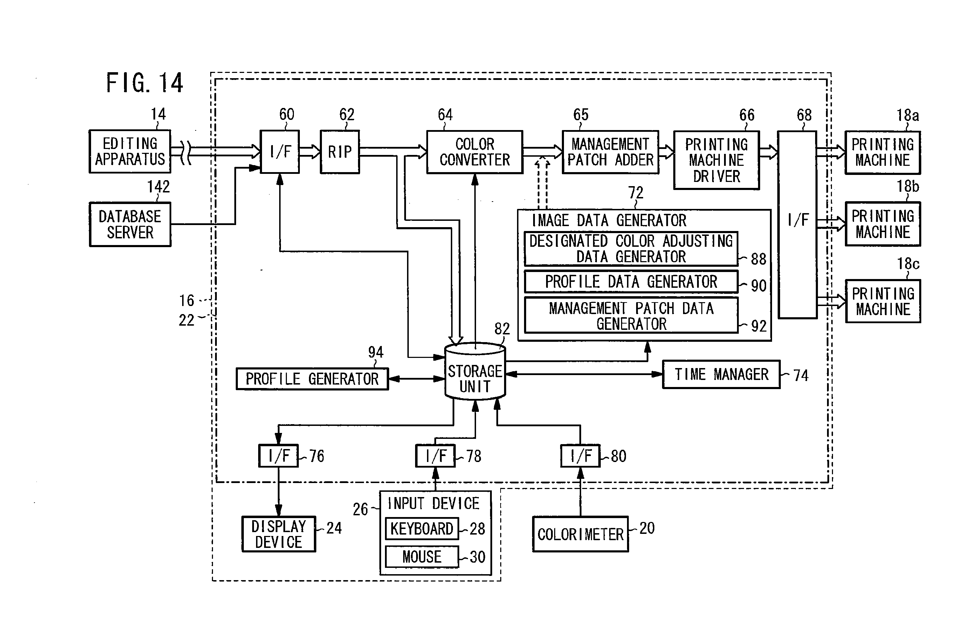

FIG. 14 is a functional block diagram of the image processing apparatus 16 shown in FIG. 13. The image processing apparatus 16 according to the second embodiment is similar in configuration to the image processing apparatus 16 according to the first embodiment (see FIG. 6), but differs therefrom in the following manner.

The main unit 22 does not include the ID number manager 96 and the data converter 98.

The I/F 68 can be connected to any one of the printing machines 18a, 18b, 18c. The printing machines 18a, 18b, 18c may be of the same type or different types, and may operate based on the same printing principles or on different printing principles. The printing machine driver 66 can generate print control signals, which are compatible with the printing machines 18a, 18b, 18c, respectively.

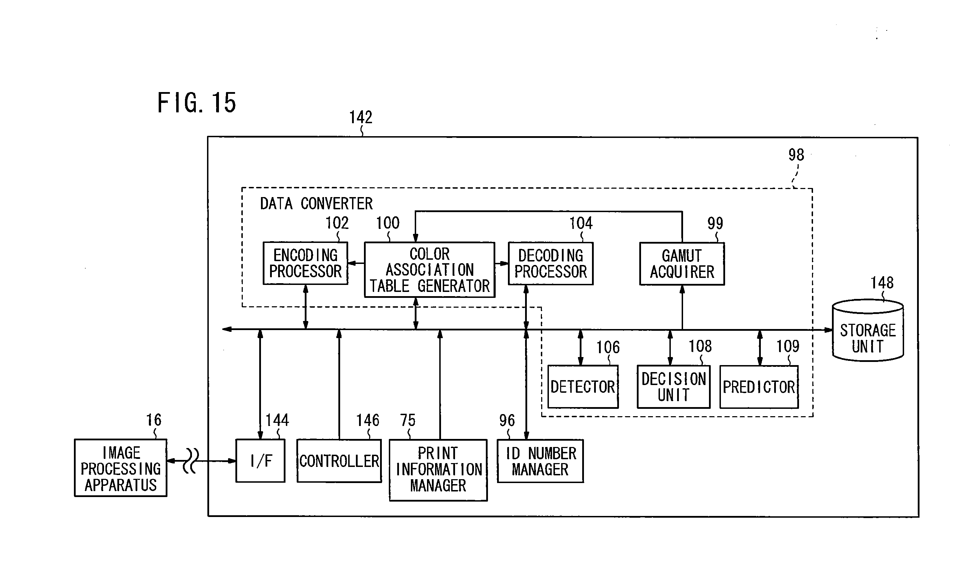

FIG. 15 is a functional block diagram of the database server 142 shown in FIG. 13.

As shown in FIG. 15, the database server 142 comprises an I/F 144, a controller 146, a print information manager 75, an ID number manager 96, a storage unit 148, and a data converter 98.

The I/F 144 allows the database server 142 and the LAN 12 to be connected to each other via a wired or wireless link.

The controller 146 comprises a CPU, etc., which controls all of the data processing processes. More specifically, the controller 146 controls not only operation of various components of the database server 142, e.g., reading data from and writing data to the storage unit 148, but also controls reception of print information of the printing machines 18a, 18b, 18c via the I/F 144 from the image processing apparatus 16, and transmission of encoded color values to the image processing apparatus via the I/F 144.

The storage unit 148 stores various data supplied from the components of the database server 142, and supplies various data stored therein to the components of the database server 142. The storage unit 148 is connected to the I/F 144, the print information manager 75, the ID number manager 96, and the data converter 98.

The print information manager 75, the ID number manager 96, the data converter 98, the gamut acquirer 99, the color association table generator 100, the encoding processor 102, the decoding processor 104, the detector 106, the decision unit 108, and the predictor 109 will not be described below, since they have the same functions as those of similar components shown in FIG. 6.

The print information managing system 140 according to the second embodiment basically is constructed as described above. Operations of the print information managing system 140 will be described below. It is assumed that prints 34, as shown in FIGS. 2 through 5, are identical in configuration. Operational details which are the same as those of the first embodiment will not be described below.

A processing sequence for managing print information with the print information managing system 140 shown in FIG. 13 is identical to the processing sequence shown in FIG. 7, and will not be described below.

A processing sequence for producing a print 34 with management patches 42 added thereto using the print information managing system 140 shown in FIG. 13 is identical to the processing sequence shown in FIG. 8, except that the image processing apparatus 16 and the database server 142 send and receive color value data, etc., via the LAN 12.

More specifically, when gamut information is acquired in step S12 (see FIG. 8), print profiles of the printing machines 18a, 18b, 18c and, if necessary, print information are sent from the image processing apparatus 16 to the database server 142. Then, steps S13 through S18 are carried out by components of the database server 142 shown in FIG. 15, i.e., the data converter 98, the controller 146, the print information manager 75, the ID number manager 96, and the storage unit 148.

Thereafter, color values of the management patches 42 are sent via the I/F 144 and the LAN 12 to the image processing apparatus 16. Color values of the management patches 42 are then sent successively to the I/F 60, the storage unit 82, and the management patch data generator 92, as shown in FIG. 14, for thereby generating path image data representative of the management patches 42. Similarly, a print 34 with management patches 42 added thereto is produced.

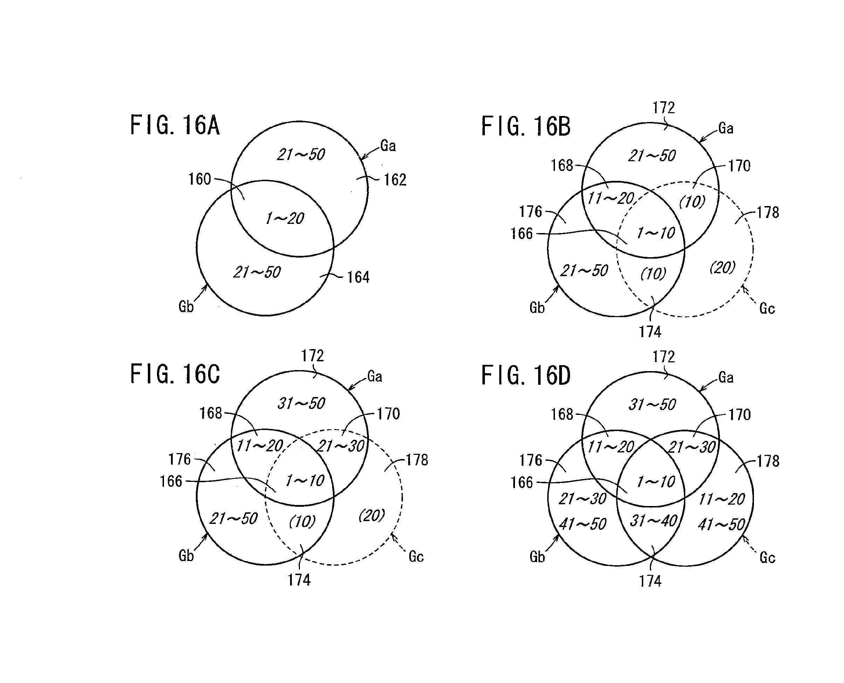

FIGS. 16A through 16D are diagrams illustrative of a process for associating ID numbers with color values of a plurality of gamuts Ga, Gb, Gc.

In FIG. 16A, global numbers 1 through 20 are assigned to color values in an overlapping area 160 between the gamut Ga of the printing machine 18a and the gamut Gb of the printing machine 18b. Private ID numbers 21 through 50 are assigned to color values in a non-overlapping area 162 of the gamut Ga, and private ID numbers 21 through 50 are assigned to color values in a non-overlapping area 164 of the gamut Gb (see FIG. 9).

A process of associating new ID numbers, for a case in which the gamut Gc of the printing machine 18c is newly added to the gamuts Ga, Gb, will be described below with reference to FIGS. 16B through 16D.

It is assumed that 10 ID numbers can be associated with color values in an overlapping area 166 of all of the gamuts Ga, Gb, Gc shown in FIG. 16B. Then, 10 global ID numbers 1 through 10 are associated with color values in the overlapping area 166 within the overlapping area 160 (see FIG. 16A), whereas the remaining 10 global ID numbers 11 through 20 are associated with color values in an overlapping area 168 within the overlapping area 160.

It also is assumed that 10 ID numbers can be associated with color values in an overlapping area 170 of the gamuts Ga, Gc shown in FIG. 16B. Then, as shown in FIG. 16C, 10 global ID numbers 21 through 30 are associated with color values in the overlapping area 170 within the non-overlapping area 162 (see FIG. 16A) of the gamut Ga, and the remaining 20 private ID numbers 31 through 50 are associated with color values in a non-overlapping area 172 within the non-overlapping area 162.

It also is assumed that 10 ID numbers can be associated with color values in an overlapping area 174 of the gamuts Gb, Gc shown in FIG. 16B. Then, as shown in FIG. 16D, 10 global ID numbers 31 through 40 are associated with color values in the overlapping area 174 within the non-overlapping area 164 (see FIG. 16A) of the gamut Gb, whereas the remaining 20 private ID numbers 21 through 30 and 41 through 50 are associated with color values in a non-overlapping area 176 within the non-overlapping area 164. The remaining 20 ID numbers 11 through 20 and 41 through 50 are associated with the color values in a non-overlapping area 178 of the gamut Gc.

According to the above process of associating ID numbers, it is possible to manage common ID numbers in a consolidated fashion, and to facilitate registration, deletion, and other processing of data. More specifically, if 50 items of print information per printing machine are to be managed, then conventionally, it has been necessary according to the related art to manage a total of 150 colors. However, according to the second embodiment of the present invention, it is only necessary to manage a total of 100 colors.

A processing sequence for acquiring print information by colorimetrically measuring management patches 42 using the print information managing system 140 shown in FIG. 13 is identical to the processing sequence shown in FIG. 8, except that the image processing apparatus 16 and the database server 142 receive and send color value data, etc., via the LAN 12.

More specifically, when colorimetric measurement of the management patches 42 in step S21 (see FIG. 12) is completed, the colorimetrically measured data and, if necessary, the type of printing machine 18 are sent from the image processing apparatus 16 to the database server 142. Then, steps S22 through S29 are carried out by components of the database server 142 shown in FIG. 15, i.e., the data converter 98, the controller 146, the print information manager 75, the ID number manager 96, and the storage unit 148.

Thereafter, print information acquired based on color values of the management patches 42 are sent via the I/F 144 and the LAN 12 to the image processing apparatus 16. Print information also is sent successively to the I/F 60, the storage unit 82, and the I/F 76 shown in FIG. 14. Then, depending on the result determined by the decision unit 108, the display device 24 displays the print information of the print 34 in step S30, or displays a reading error in step S31.

By colorimetrically measuring the management patches 42 in this manner, print information of the print 34 is automatically acquired and appropriately managed.

The present invention is not limited to the above embodiments. Various changes and modifications can be made to the embodiments without departing from the scope of the invention.

In the above embodiments, the profile color chart 34p (see FIG. 2) and the designated color adjusting color chart 34c (see FIG. 3) have 100 color patches 36 and 49 color patches 44, respectively. However, the number of color patches 36, 44 may freely be changed.

In the above embodiments, the profile color chart 34p (see FIG. 2) and the designated color adjusting color chart 34c (see FIG. 3) have been illustrated as types of color charts. However, the present invention is not limited to such types of color charts, but may utilize other types of color charts, which are presented to the client for final confirmation of designated colors.

Combinations of the number of printing machines 18, as well as the types and number of mediums 32, are not limited to those described above according to the first and second embodiments. The present invention also is applicable to combinations of at least two printing machines 18 and/or at least two types of mediums 32.

Various functions for performing processes, including (1) encoding, (2) print instruction, (3) acquisition of colorimetric data, (4) decoding, and (5) acquisition of print information, may be distributed to a plurality of apparatus.

In the above embodiments, the printing machine 18 comprises an inkjet printer. However, alternatively, the printing machine 18 may comprise an offset printing press, an electrophotographic printer, a thermosensitive printer, or the like.

**Claims**

1. A print information managing apparatus (16) comprising:

   a gamut acquirer (99) for acquiring a plurality of gamuts (G1, G2, Ga, Gb, Gc);
   a common information associator (100) for associating color values, in an overlapping area (120, 166, 168, 170, 174) in which at least two of the gamuts (G1, G2, Ga, Gb, Gc) acquired by the gamut acquirer (99) overlap each other, with common information that is common to prints (34, 34c, 34m, 34p) for producing the at least two of the gamuts;
   an encoding processor (102) for encoding print information of the prints (34, 34c, 34m, 34p) into prescribed color values (130) according to the color values and the common information, which are associated with each other by the common information associator (100); and
   a management patch adder (65) for adding to the prints (34, 34c, 34m, 34p) management patches (42, 42a, 42b, 42c, 42d) having the prescribed color values (130) encoded by the encoding processor (102).

2. The print information managing apparatus (16) according to claim 1, wherein the common information associator (100) associates the color values in the overlapping area (120, 166, 168, 170, 174) with the common information using the plurality of gamuts (G1, G2, Ga, Gb, Gc), which are produced by at least two mediums (32a, 32b) printed by one printing machine (18).

3. The print information managing apparatus (16) according to claim 1, wherein the common information associator (100) associates the color values in the overlapping area (120, 166, 168, 170, 174) with the common information using the plurality of gamuts (G1, G2, Ga, Gb, Gc), which are produced by printing processes carried out by at least two printing machines (18).

4. The print information managing apparatus (16) according to claim 1, wherein the common information associator (100) uses identifying information, which identifies the print information of the prints (34, 34c, 34m, 34p), as the common information.

5. The print information managing apparatus (16) according to claim 1, wherein the common information associator (100) uses the print information of the prints (34, 34c, 34m, 34p) as the common information.

6. The print information managing apparatus (16) according to claim 1, further comprising:

   a print controller (66) for controlling printing machines (18, 18a, 18b, 18c) to print the prints (34, 34c, 34m, 34p) to which the management patches (42, 42a, 42b, 42c, 42d) have been added by the management patch adder (65),
   wherein the printed prints (34, 34c, 34m, 34p) include at least color charts (34c, 34p).

7. The print information managing apparatus (16) according to claim 1, further comprising:

   a decoding processor (104) for decoding colorimetrically measured color values (P1, P2) of the management patches (42, 42a, 42b, 42c, 42d) according to the color values and the common information, which are associated with each other by the common information associator (100), thereby to acquire the print information.

8. The print information managing apparatus (16) according to claim 7, further comprising:

   a colorimetric unit (20) for colorimetrically measuring the management patches (42, 42a, 42b, 42c, 42d) in order to acquire the color values (P1, P2).

9. A print information managing method comprising the steps of:

   acquiring a plurality of gamuts (G1, G2, Ga, Gb, Gc);
   associating color values, in an overlapping area (120, 166, 168, 170, 174) in which at least two of the acquired gamuts (G1, G2, Ga, Gb, Gc) overlap each other, with common information that is common to prints (34, 34c, 34m, 34p) for producing the at least two of the gamuts;
   encoding print information of the prints (34, 34c, 34m, 34p) into prescribed color values (130) according to the color values and the common information, which are associated with each other; and
   adding to the prints (34, 34c, 34m, 34p) management patches (42, 42a, 42b, 42c, 42d) having the encoded prescribed color values (130).

10. A print information managing system (10) comprising:

   printing machines (18, 18a, 18b, 18c) for printing prints (34, 34c, 34m, 34p);
   a print information managing apparatus (16) for adding management patches (42, 42a, 42b, 42c, 42d) representative of print information of the printing machines (18, 18a, 18b, 18c); and
   a colorimeter (20) for colorimetrically measuring the management patches (42, 42a, 42b, 42c, 42d),
   wherein the print information managing apparatus (16) comprises:

      a gamut acquirer (99) for acquiring a plurality of gamuts (G1, G2, Ga, Gb, Gc);
      a common information associator (100) for associating color values, in an overlapping area (120, 166, 168, 170, 174) in which at least two of the gamuts (G1, G2, Ga, Gb, Gc) acquired by the gamut acquirer (99) overlap each other, with common information that is common to the prints (34, 34c, 34m, 34p) for producing the at least two of the gamuts;
      an encoding processor (102) for encoding print information of the prints (34, 34c, 34m, 34p) into prescribed color values (130) according to the color values and the common information, which are associated with each other by the common information associator (100); and
a management patch adder (65) for adding to the prints (34, 34c, 34m, 34p) management patches (42, 42a, 42b, 42c, 42d) having the prescribed color values (130) encoded by the encoding processor (102).

11. A recording medium (82) storing therein a program for enabling a computer to control printing machines (18, 18a, 18b, 18c) to print prints (34, 34c, 34m, 34p), to which management patches (42, 42a, 42b, 42c, 42d) representative of print information of the printing machines (18, 18a, 18b, 18c) have been added, wherein the program enables the computer to further function as:

a gamut acquirer (99) for acquiring a plurality of gamuts (G1, G2, Ga, Gb, Gc);
a common information associator (100) for associating color values, in an overlapping area (120, 166, 168, 170, 174) in which at least two of the gamuts (G1, G2, Ga, Gb, Gc) acquired by the gamut acquirer (99) overlap each other, with common information that is common to the prints (34, 34c, 34m, 34p) for producing the at least two of the gamuts;
an encoding processor (102) for encoding print information of the prints (34, 34c, 34m, 34p) into prescribed color values (130) according to the color values and the common information, which are associated with each other by the common information associator (100); and
a management patch adder (65) for adding to the prints (34, 34c, 34m, 34p) management patches (42, 42a, 42b, 42c, 42d) having the prescribed color values (130) encoded by the encoding processor (102).

# FIG. 1

# FIG. 2

FIG. 3

# FIG. 4

XYZ Corp. Color Master
Produced 01/01/2010

# FIG. 5

FIG. 6

# FIG. 7

START

PRINT PRINT WITH MANAGEMENT PATCHES ADDED THERETO | S1

COLORIMETRICALLY MEASURE MANAGEMENT PATCHES, ETC. | S2

MANAGE PRINT INFORMATION, COLOR INFORMATION | S3

END

FIG. 8

<u>S1</u>

START

SELECT PRINT PROFILE | S11

ACQUIRE GAMUT INFORMATION | S12

CHANGE FROM PREVIOUSLY ACQUIRED GAMUT INFORMATION ? | S13 — NO

YES

REGENERATE COLOR ASSOCIATION TABLE | S14

DO NOT UPDATE COLOR ASSOCIATION TABLE | S15

ASSIGN ID NUMBER | S16

ENCODE ID NUMBERS (DETERMINE COLORS OF PATCHES) | S17

CALCULATE CHECKSUM | S18

JOIN MANAGEMENT PATCH IMAGE DATA AND OTHER IMAGE DATA | S19

PRINT | S20

RETURN

# FIG. 9

# FIG. 10

# FIG. 11

| ID NUMBER | 00001 |
|---|---|
| PRINTING MACHINE TYPE | PRINTER-1 |
| SERIAL NUMBER | IJP-0100 |
| MEDIUM TYPE | VINYL CHLORIDE A100 |
| PRINT SIZE | AO |
| RESOLUTION | 2880 × 1440 |
| PRINT MODE | HIGH IMAGE QUALITY MODE |
| PRINT TIME | 10:00:30 01/01/2010 |
| PRINT ATTRIBUTE | NORMAL/image.pdf |
| TARGET PROFILE | JapanColor2007.icc |
| OUTPUT PROFILE | printer1_A100.icc |
| SPECIAL COLOR INFORMATION | NONE |

S2

START

FIG. 12

COLORIMETRICALLY MEASURE MANAGEMENT PATCHES

DETECT HEAD PATCH

ACQUIRE COLOR VALUES OF PATCHES

S24

L*,a*,b* IN PRESCRIBED RANGE ?  NO

YES

S25

ISSUE WARNING CONCERNING ACQUISITION OF WRONG COLOR VALUES

DECODE COLOR VALUES  S26

NO  TAIL PATCH DETECTED ?  S27

YES

ACQUIRE ID NUMBER  S28

S29

CONFIRM CHECKSUM  NG

OK

S30

DISPLAY PRINT INFORMATION

S31

ISSUE WARNING CONCERNING READING ERROR

RETURN

FIG. 13

FIG. 14

EP 2 348 702 A2

FIG. 15

FIG. 16A

FIG. 16B

FIG. 16C

FIG. 16D

## REFERENCES CITED IN THE DESCRIPTION

**Patent documents cited in the description**

- JP 2005328255 A
- JP 2007221571 A
- JP 2007068083 A